# EUROPÄISCHE PATENTSCHRIFT

(11) **EP 4 460 418 B1**
(45) Veröffentlichungstag und Bekanntmachung des Hinweises auf die Patenterteilung: **08.10.2025**
(21) Anmeldenummer: 22821283.3
(22) Anmeldetag: 29.11.2022
(51) Int. Cl.: B29C 45/26, B29C 33/00, B29C 33/12, B29C 45/16, B29C 45/14

(54) **VERFAHREN UND SPRITZGUSSWERKZEUG ZUR HERSTELLUNG EINES ERZEUGNISSES AUS EINLEGETEIL UND ANGESPRITZTEM KUNSTSTOFFKÖRPER**
METHOD AND INJECTION MOLDING TOOL FOR PRODUCING A PRODUCT FROM AN INSERT PART AND AN INJECTION-MOLDED PLASTIC BODY
PROCÉDÉ ET OUTIL DE MOULAGE PAR INJECTION POUR LA FABRICATION D'UN PRODUIT À PARTIR D'UNE PIÈCE RAPPORTÉE ET D'UN CORPS EN PLASTIQUE MOULÉ PAR INJECTION

(30) Priorität: 06.01.2022 CH 272022
(43) Veröffentlichungstag der Anmeldung: 13.11.2024
(73) Patentinhaber: Fostag Formenbau AG, 8260 Stein am Rhein (CH)
(72) Erfinder: MÜHLEMANN, Rolf, 8255 Schlattingen (CH)
(74) Vertreter: Prins Intellectual Property AG
(86) Internationale Anmeldenummer: PCT/CH2022/050033
(87) Internationale Veröffentlichungsnummer: WO 2023/130192

(56) Entgegenhaltungen:
- EP-A1- 0 712 709
- EP-A1- 2 821 203
- EP-A1- 3 120 987
- EP-A1- 3 421 215
- JP-A- S5 829 618
- US-A1- 2009 250 372

## Beschreibung

### Technisches Gebiet

Die Erfindung betrifft ein Verfahren und ein Spritzgusswerkzeug zur Herstellung eines Erzeugnisses umfassend ein Einlegeteil mit einem zu verstärkenden Rand und einen an den Rand angespritzten Kunststoffkörper, wobei der Kunststoffkörper einen Randbereich des Einlegeteils beidseitig und stirnseitig umgibt.

### Technischer Hintergrund

Insbesondere bei Behältern und Verpackungen besteht ein Bedarf, flächige, biegsame Teile entlang einem Rand mit einem Kunststoffkörper zu versehen, welcher eine höhere Festigkeit als das flächige Material aufweist.

Meistens werden dabei die einzelnen Teile gesondert gefertigt und anschliessend mechanisch zusammengefügt und gegebenenfalls miteinander verklebt (z.B. FR2175094 oder EP0453754).

US2009250372 offenbart einen Behälter, welcher aus einem Zuschnitt ausgebildet ist und einen Flansch ausbildet. Eine Unterseite des Flansches ist mit einer spritzgussgeformten Struktur versehen.

Aus WO2015000797 ist ein effizienteres Verfahren bekannt, um einen Kragen aus Kunststoff direkt an einen umlaufenden Rand eines Einlegeteils anzuspritzen. Dazu wird das Einlegeteil in einer Aufnahmekavität eines Spritzgusswerkzeugs eingelegt. Der zu umspritzende Randbereich des Einlegeteils wird im Spritzgusswerkzeug mittels ortsfesten und beweglichen Werkzeugteilen fixiert. Die Aufnahmekavität erstreckt sich dabei lediglich über einige Teilbereiche an einer Unterseite des Randbereichs. In einem ersten Schritt werden radial nach aussen gerichtete Kunststoffstege an der Unterseite des Randbereichs angeformt. In einem zweiten Schritt werden Werkzeugteile, zwischen denen die Kunststoffstege ausgebildet worden sind, abgesenkt und ein umlaufender Kragen wird in einer zweiten Injektion an der Unterseite des Randbereichs ausgebildet. Anschliessend wird ein bewegliches kavitätsbildendes Werkzeugteil an der Oberseite des Randbereichs weggefahren und die freigegebene Kavität wird zur Ausbildung des umlaufenden Kragens an der Oberseite in einer dritten Injektion gefüllt.

Das Hauptproblem beim Umspritzen des Randbereichs liegt darin, dass die zu umspritzenden Materialien häufig nicht formstabil sind resp. den beim Spritzvorgang auftretenden Druck nicht standhalten und unkontrolliert durch die Schmelze weggedrückt werden. Aus diesem Grund basiert das Verfahren aus WO2015000797 auf einem kompliziert gebauten Spritzgusswerkzeuge mit einer Vielzahl unabhängig voneinander bewegbaren und kavitätsbildenden Werkzeugteile. Diese fixieren in einem ersten Schritt den Randbereich und geben nach und nach Teilbereiche einer Kavität frei bis der Rand des Einlegeteils komplett umspritzt ist, d.h. am Ende des Spritzgussvorgangs ist der Randbereich beidseitig und über die Stirnfläche hinweg vom Kunststoffkörper umschlossen.

### Darstellung der Erfindung

Es ist eine Aufgabe der Erfindung, ein Verfahren zur Herstellung eines Erzeugnisses aus Einlegeteil und angespritztem Kunststoffkörper anzugeben, welches die Probleme des Stands der Technik löst und eine zuverlässige, feste Verbindung zwischen einem Einlegeteil und eine angespritzten Kunststoffkörper gewährleistet.

Diese Aufgabe wird durch ein Verfahren mit den Merkmalen des Anspruch 1 und einem Spritzgusswerkzeug mit den Merkmalen des Anspruchs 8 gelöst.

Das Verfahren zur Herstellung eines Erzeugnisses umfassend ein becherförmiges Einlegeteil mit einem zu verstärkenden umlaufenden Rand und einen an den Rand angespritzten umlaufenden Kunststoffkörper, wobei der Kunststoffkörper einen Randbereich des becherförmigen Einlegeteils beidseitig und stirnseitig umgibt, weist folgende Schritte auf: (a) Bereitstellen einer ersten Formpartie eines Spritzgusswerkzeugs; (b) Einlegen des becherförmigen Einlegeteils in die erste Formpartie, wobei die erste Formpartie und das Einlegeteil derart ausgebildet sind, dass am zu umspritzenden Randbereich innenseitig und stirnseitig eine erste umlaufende Kavität ausgebildet ist und das Einlegeteil mit der Aussenseite des Randbereichs an einer Wand der ersten Kavität anliegt; (c) Einspritzen einer ersten Kunststoffschmelze in die erste umlaufende Kavität zur Fertigung eines ersten umlaufenden Kunststoffkörperteils, wobei die umlaufende Kavität einen Steg aufweist, welcher im ersten umlaufenden Kunststoffkörperteil an der Stirnseite des Randbereichs des Einlegeteils eine Aussparung ausbildet; (d) Bereitstellen einer zweiten Formpartie eines Spritzgusswerkzeugs; (e) Einlegen des becherförmigen Einlegeteils mit dem ersten umlaufenden Kunststoffkörperteil in die zweite Formpartie, wobei die zweite Formpartie derart ausgebildet ist, dass am zu umspritzenden Randbereich aussenseitig eine zweite umlaufende Kavität zur Fertigung eines zweiten umlaufenden Kunststoffkörperteils ausgebildet ist und dass die Aussparung im ersten umlaufenden Kunststoffkörperteil mit der zweiten umlaufenden Kavität verbunden ist; (f) Einspritzen einer zweiten Kunststoffschmelze in die zweite Formpartie, so dass die zweite Kunststoffschmelze durch die Aussparung des ersten Kunststoffkörperteils fliesst, die zweite Kavität füllt und so den zweiten Kunststoffkörperteil ausbildet; (g) Entformen des Erzeugnisses mit einem umlaufenden Kunststoffkörper bestehend aus dem ersten und dem zweiten Kunststoffkörperteil.

Mit dem Verfahren wird demnach der Kunststoffkörper mit einem Zweikomponenten Spritzgussverfahren hergestellt, indem erst ein erster umlaufender Kunststoffkörperteil und anschliessend ein zweiter umlaufender Kunststoffkörperteil gespritzt wird. Die beiden Teile sind im Bereich der Stirnseite des Randbereichs des Einlegeteils fest miteinander verbunden und bilden so den umlaufenden Kunststoffkörper.

Der Vorteil des Verfahrens liegt darin, dass mittels des Stegs ein Durchgang im ersten umlaufenden Kunststoffkörperteil geschaffen wird, durch welchen die zweite Kunststoffschmelze in die zweite Kavität gelangt. Auf diese Weise können die Einspritzstellen resp. die Spritzgussdüsen auf derselben Seite des becherförmigen Erzeugnisses - nämlich an der dem Boden abgewandten Seite - angeordnet sein. Dies ist insbesondere von Vorteil, weil auf der dem Boden zugewandten Seite kaum Platz für die Spritzgussdüsen vorhanden ist.

Eine Formpartie weist üblicherweise eine Matrize und einen Kern auf, welche zusammen die Kavität eines Spritzgusswerkzeugs ausbilden. Ein becherförmiges Einlegeteil weist typischerweise einen Boden und eine umlaufende Seitenwand auf. Mit "innenseitig" ist die Innenseite des becherförmigen Einlegeteils gemeint. Falls das becherförmige Einlegeteil am oberen offenen Rand einen nach aussen gerichteten Flansch (d.h. einen flanschähnlichen nach aussen gerichteten Rand), z.B. zur Befestigung einer Deckfolie und/oder zur Ausbildung von Dichtungsmitteln, aufweist, so ist mit "innenseitig" auch die obere dem Boden des becherförmigen Einlegeteils abgewandte Seite des Flansches gemeint. Mit dem Begriff "stirnseitig" ist jeweils die Stirnseite des Randes resp. des Flansches gemeint. Der Begriff "aussenseitig" bezieht sich auf die Aussenseite des becherförmigen Einlegeteils. Falls ein Flansch vorhanden ist, so ist auch die untere dem Boden zugewandte Seite des Flansches gemeint.

Mit dem zu verstärkenden Rand ist ein Bereich des Einlegeteils gemeint, welcher schmal ist und sich über eine gewisse Länge erstreckt (z.B. ein länglicher Rand eines Einlegeteils). Der Randbereich hat zwei sich gegenüberliegende Seitenflächen und eine Stirnfläche. Ein solcher Randbereich weist häufig eine ungenügende Stabilität auf und es ist wünschenswert, diesen zu verstärken, um beispielsweise dem fertigen Erzeugnis mehr Stabilität oder andere Funktionen (z.B. Befestigungsbereiche für weiterer Teile wie Deckel, etc.) zu geben. Der Randbereich kann beispielsweise ein oberer, umlaufender Rand eines Bechers oder eines Kapselkörpers einer Kaffeekapsel sein.

Das Verfahren ist für Einlegeteile geeignet, welche einen biegsamen Randbereich aufweisen, bei dem die Gefahr besteht, dass er durch die Kunststoffschmelze weggedrückt wird und so mit dem Kunststoffkörper keine feste und dauerhafte Verbindung eingehen kann. Entsprechend kann das Einlegeteil dünnwandig und/oder flächig ausgebildet.

Mit Kunststoff sind alle spritzgussfähigen Materialen gemeint. Diese umfassen herkömmliche spritzgussfähige Kunststoffe, aber auch neuartige spritzgussfähige Materialien aus Naturstoffen, die möglicherweise zukünftig nicht mehr als Kunststoff bezeichnet werden.

In einigen Ausführungsformen kann die erste und zweite Formpartie resp. die erste und zweite Kavität jeweils mindestens eine Einspritzstelle für die erste respektive zweite Kunststoffschmelze aufweisen. Der Steg kann in einem Bereich angeordnet sein, in welchem zwei Fliessfronten der ersten Kunststoffschmelze zusammentreffen. Ist beispielsweise eine einzige Einspritzstelle vorhanden, dann liegt der Steg bevorzugt auf der gegenüberliegenden Seite der umlaufenden Kavität, und zwar in dem Bereich, in welchem die Fliessfronten der ersten Kunststoffschmelze aufeinandertreffen. Sind mehrere Einspritzstellen vorhanden, dann kann die Kavität bevorzugt auch mehrere Stege aufweisen. Die mehreren Einspritzstellen können entlang der ersten Kavität gleichmässig angeordnet sein und die mehreren Stege können jeweils mittig zwischen zwei Einspritzstellen angeordnet sein. Auch hier liegen dann die Stege in dem Bereich, in welchem die Fliessfronten der ersten Kunststoffschmelze aufeinandertreffen.

In einigen Ausführungsformen kann das Einlegeteil mit dem ersten Kunststoffkörperteil derart in die zweite Formpartie eingelegt werden, dass die Aussparung sich bei der Einspritzstelle für die zweite Kunststoffschmelze befindet. Diese Aussparung bildet so einen Teil der zweiten Kavität, in welche die zweite Kunststoffschmelze eingespritzt wird. Die Aussparung erlaubt es, die Spritzgussdüse für die zweite Kunststoffschmelze an der gleichen Seite wie die Spritzgussdüse für die erste Kunststoffschmelze anzuordnen.

In einigen Ausführungsformen kann sich die Einspritzstelle für die erste Kunststoffschmelze und die Einspritzstelle für die zweite Kunststoffschmelze auf der gleichen Seite der jeweiligen Formpartie befinden.

Das Erzeugnis kann ein Behälter mit einem Behälterkörper oder einer Behälterwand und einem eine Behälteröffnung umlaufenden Kragen sein, wobei der Behälterkörper oder die Behälterwand durch das Einlegeteil und der Behälterkragen durch den Kunststoffkörper ausgebildet ist. Der umlaufende Kragen kann einen flanschähnlichen nach aussen gerichteten Rand, ein Aussengewinde oder Rastmittel für einen Behälterdeckel aufweisen. Der Behälterdeckel kann entsprechend eine Siegelfolie, ein Schraubdeckel oder einen Behälterdeckel mit entgegengesetzten Rastmitteln sein.

Das Einlegeteil kann einen kreisförmig, oval oder rechteckig umlaufenden Rand aufweisen. Ein rechteckig umlaufender Rand weist in der Regel gerundete Ecken auf. Das Einlegeteil kann auch einen flanschähnlichen nach aussen gerichteten Rand (Flansch) aufweisen, welcher mit dem Kunststoffkörper umspritzt wird.

Das Einlegeteil kann einen biegsamen, nicht-formstabilen und/oder dünnwandigen oder flächigen Randbereich aufweisen. Es kann aus Papier, Karton, einem textilen Flächengebilde, Metall, Kunststoff oder Laminaten aus solchen Materialien gefertigt sein. Einige der Materialien können biologisch abbaubar oder kompostierbar (industriell und auf dem Hauskompost) sein. Die Dicke des Randbereichs kann 0.1 bis 2 mm betragen. Der Randbereich kann einen umlaufender Randbereich sein, z.B. der Rand eines becherförmigen Behälters. Der Randbereich des Einlegeteils kann eine raue Oberfläche oder eine Beschichtung aufweisen, so dass der angespritzte Kunststoff eine feste Verbindung mit dem Einlegeteil bilden kann. Der Randbereich kann dazu auch mit Aussparungen oder Öffnungen versehen sein.

Der angespritzte Kunststoffkörper kann auf Grund der Form oder des Materials derart ausgestaltet sein, dass er fester oder formstabiler als der Randbereich des Einlegeteils ist und ein versteifendes Kunststoffelement ausbildet. Als Kunststoff können auch biologisch abbaubare oder kompostierbare (industriell und auf dem Hauskompost) spritzgussfähige Materialien verwendet werden. Generell sind vorliegend mit Kunststoff alle bekannten und zukünftigen spritzgussfähige Materialien gemeint.

Das Verfahren kann beispielsweis zur Herstellung eines Behälters umfassend einen Behälterkörper, der einen oberen, umlaufenden Rand zur Bildung einer Öffnung aufweist, und eine den oberen Rand umschliessenden umlaufenden Kragen aus Kunststoff verwendet werden. Der Behälterkörper kann dabei eine geringere Steifigkeit als der umlaufende Kragen aufweisen.

Die Erfindung betrifft weiter ein Spritzgusswerkzeug zur Durchführung des Verfahrens zur Herstellung eines Erzeugnisses umfassend ein Einlegeteil mit einem zu verstärkenden Rand und einen an den Rand angespritzten Kunststoffkörper, wobei der Kunststoffkörper einen Randbereich des Einlegeteils beidseitig und stirnseitig umgibt. Das Spritzgusswerkzeug umfasst Spritzgusswerkzeug mindestens eine erste Formpartie und mindestens eine zweite Formpartie. Die erste Formpartie bildet eine erste umlaufende Kavität aus, in welche das Einlegeteil mit dem zu umspritzenden Randbereich einlegbar ist, so dass die Aussenseite des Randbereichs an einer Wand der ersten Kavität anliegt. Die erste umlaufende Kavität weist einen Steg zur Erzeugung einer Aussparung im ersten umlaufenden Kunststoffkörperteil auf. Die zweite Formpartie ist derart ausgebildet, dass das becherförmige Einlegeteil mit dem ersten umlaufenden Kunststoffkörperteil in die zweite Formpartie einlegbar ist und dass am zu umspritzenden Randbereich aussenseitig eine zweite umlaufende Kavität zur Fertigung des zweiten umlaufenden Kunststoffkörperteils ausgebildet ist, wobei die Aussparung im ersten umlaufenden Kunststoffkörperteil mit der zweiten umlaufenden Kavität verbunden ist.

In einigen Ausführungsformen des Spritzgusswerkzeugs kann der Steg in einem Bereich angeordnet sein, in welchem zwei Fliessfronten der ersten Kunststoffschmelze zusammentreffen.

In einigen Ausführungsformen des Spritzgusswerkzeugs kann die erste Kavität mehrere Einspritzstellen und mehrere Stege aufweisen, wobei die mehreren Einspritzstellen entlang der ersten Kavität gleichmässig angeordnet sind und die mehreren Stege jeweils mittig zwischen zwei Einspritzstellen angeordnet sind.

In einigen Ausführungsformen des Spritzgusswerkzeugs kann sich die Einspritzstelle für die erste Kunststoffschmelze und die Einspritzstelle für die zweite Kunststoffschmelze auf der gleichen Seite der jeweiligen Formpartie befinden.

### Kurze Erläuterung zu den Figuren

Die Erfindung soll nachfolgend anhand von Ausführungsbeispielen im Zusammenhang mit der(n) Zeichnung(en) näher erläutert werden. Es zeigen:
- Fig. 1: eine Schnittdarstellung einer ersten Formpartie unter (a) im Bereich einer Einspritzstelle und unter (b) im Bereich eines Stegs;
- Fig. 2: eine Schnittdarstellung einer zweiten Formpartie unter (a) im Bereich der Anspritzung des ersten Spritzgusskörperteil und unter (b) im Bereich einer Einspritzstelle;
- Fig. 3: eine Schnittdarstellung durch einen Abschnitt eines Erzeugnisses aus einem Einlegeteil und einem angespritzten Kunststoffkörper;
- Fig. 4: ein Schnittdarstellung durch die erste Formpartie im Bereich der ersten Kavität.

### Wege zur Ausführung der Erfindung

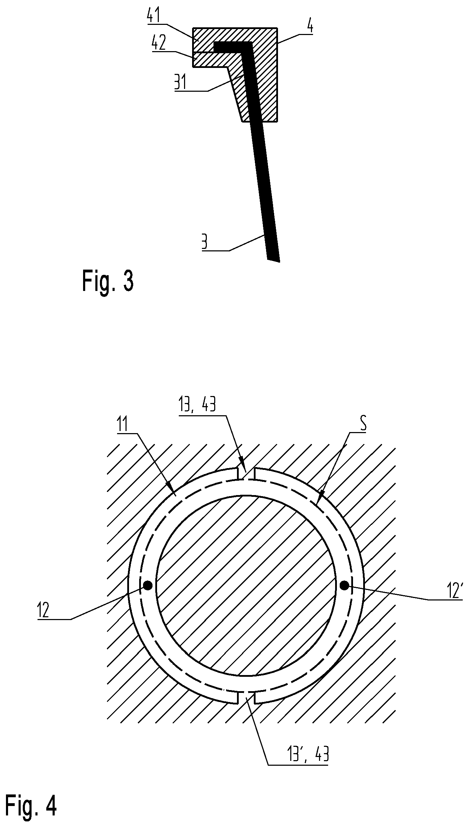

Fig. 4 zeigt eine Schnittdarstellung durch einen Abschnitt eines Erzeugnisses aus einem becherförmigen Einlegeteil 3 mit einem zu verstärkenden umlaufenden Rand und einem an den Rand angespritzten umlaufenden Kunststoffkörper 4. Dabei umschliesst der Kunststoffkörper 4 einen Randbereich 31 des becherförmigen Einlegeteils 3 beidseitig und stirnseitig. Das becherförmige Einlegeteil 3 weist typischerweise einen Boden und eine umlaufende Seitenwand auf. Am oberen Rand der Seitenwand ist ein flanschähnlicher nach aussen gerichteten Rand (Flansch) ausgebildet. Der Kunststoffkörper 4 wird - wie weiter unten dargelegt - in einem Zweikomponenten-Verfahren mittels zweier Formpartien gespritzt und ist entsprechend aus einem ersten umlaufenden Kunststoffkörperteil 41 und einem zweiten umlaufenden Kunststoffkörperteil 42 gefertigt.

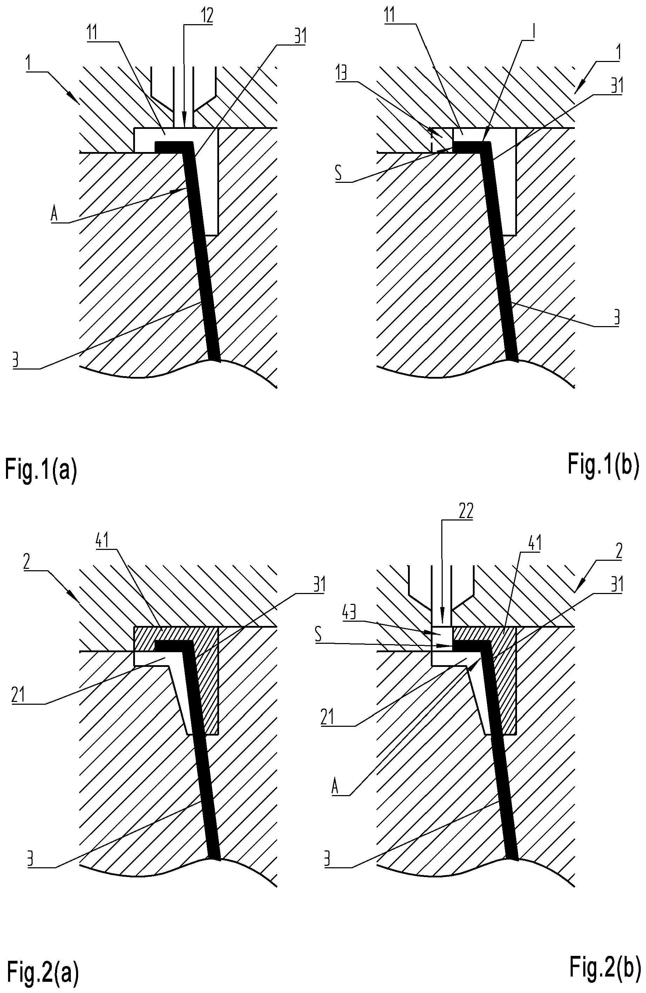

Fig. 1 zeigt eine Schnittdarstellung eines Ausschnittes einer ersten Formpartie 1, unter (a) im Bereich einer Einspritzstelle 12 für die erste Kunststoffschmelze und unter (b) im Bereich eines Stegs 13. Die erste Formpartie 1 bildet eine erste umlaufende Kavität 11 aus, in welche der zu umspritzende Randbereich 31 des Einlegeteils 3 eingelegt werden kann. Dabei liegt die Aussenseite A des Einlegeteils 3 auf einer Wand der ersten Kavität 11 auf. Die Innenseite I des Einlegeteils 3 ist zur ersten Kavität 11 hin ausgerichtet.

Die Kavität 1 weist mindestens eine Einspritzstelle 12 für die erste Kunststoffschmelze zur Fertigung des ersten umlaufenden Kunststoffkörperteils 41 auf. Diese ersten umlaufende Kunststoffkörperteil 41 bildet einen Teil des Kunststoffkörpers und ist an der Innenseite I des Einlegeteils angeordnet. Wenn die erste Kunststoffschmelze eingespritzt wird, verteilt sich diese in der ersten umlaufenden Kavität 11. In einem Bereich der ersten umlaufenden Kavität 11, in welcher die Fliessfronten der ersten Kunststoffschmelze aufeinandertreffen, ist innerhalb der ersten Kavität 11 eine Steg 13 ausgebildet (vgl. Fig. 1(b)). Dieser Steg 13 ist derart angeordnet, dass eine Stirnseite S des Randbereichs 31 des Einlegeteils an den Steg 13 angrenzt. Der Steg 13 formt eine Aussparung 43 in das erste Kunststoffkörperteil 41, deren Funktion weiter unten unter Fig. 2(b) erklärt wird.

Fig. 2 zeigt eine Schnittdarstellung eines Ausschnittes einer zweiten Formpartie 2, unter (a) im Bereich der Anspritzung des ersten Spritzgusskörperteil 41 und unter (b) im Bereich einer Einspritzstelle einer zweiten umlaufenden Kavität 21. Die zweite Formpartie 2 bildet die zweite umlaufende Kavität 21 zur Fertigung des zweiten umlaufenden Kunststoffkörperteils 42. Die zweite Kavität 21 ist derart ausgebildet, dass das Einlegeteil 3 mit dem angespritzten ersten Kunststoffkörperteil 41 darin aufgenommen werden kann und an der Aussenseite die freie zweite Kavität 21 ausgebildet ist. Das Einlegeteil mit dem ersten Kunststoffkörperteil 41 werden dabei derart ausgerichtet, dass eine Einspritzstelle 22 der zweite Formpartie 2 in der Aussparung 43 des ersten Kunststoffkörperteils 41 zu liegen kommt. Die zweite Kunststoffschmelze wird dabei durch die Aussparung 43 gespritzt und füllt so die zweite Kavität 21 an der Aussenseite A des Einlegeteils 3.

Fig. 4 zeigt ein Schnittdarstellung durch die erste Formpartie 1 im Bereich der ersten Kavität 11. In der gezeigten Ausführungsform ist die erste Formpartie 1 mit zwei Einspritzstellen 12, 12' versehen, welche an diametral gegenüberliegenden Stellen angeordnet sind. Weiter weist die erste Kavität 11 zwei Stege 13, 13' auf, welche jeweils zwischen den beiden Einspritzstellen 12, 12' angeordnet sind und jeweils eine Aussparung 43 im ersten Kunststoffkörperteil 41 ausbilden. Die strichlinierte Linie deuten die Stirnseite des Einlegeteils 3 an.

### Bezeichnungsliste

- 1: erste Formpartie
- 11: erste umlaufende Kavität
- 12, 12': Einspritzstelle für die erste Kunststoffschmelze
- 13, 13': Steg
- 2: zweite Formpartie
- 21: zweite umlaufende Kavität
- 22: Einspritzstelle für die zweite Kunststoffschmelze
- 3: becherförmiges Einlegeteil
- 31: Rand, Randbereich
- 4: Kunststoffkörper
- 41: erster umlaufender Kunststoffkörperteil
- 42: zweiter umlaufender Kunststoffkörperteil
- 43: Aussparung
- A: Aussenseite des Randbereichs
- I: Innenseite des Randbereichs
- S: Stirnseite/Stirnfläche des Randbereichs

## Patentansprüche

1. Verfahren zur Herstellung eines Erzeugnisses umfassend ein becherförmiges Einlegeteil (3) mit einem zu verstärkenden umlaufenden Rand und einen an den Rand angespritzten umlaufenden Kunststoffkörper (4), wobei der Kunststoffkörper (4) einen Randbereich (31) des becherförmigen Einlegeteils (3) beidseitig und stirnseitig umgibt, wobei das Verfahren folgende Schritte aufweist:
a. Bereitstellen einer ersten Formpartie (1) eines Spritzgusswerkzeugs;
b. Einlegen des becherförmigen Einlegeteils (3) in die erste Formpartie (1), wobei die erste Formpartie (1) und das Einlegeteil (3) derart ausgebildet sind, dass am zu umspritzenden Randbereich (31) innenseitig und stirnseitig eine erste umlaufende Kavität (11) ausgebildet ist und das Einlegeteil (3) mit der Aussenseite des Randbereichs (31) an einer Wand der ersten Kavität (11) anliegt;
c. Einspritzen einer ersten Kunststoffschmelze in die erste umlaufende Kavität (11) zur Fertigung eines ersten umlaufenden Kunststoffkörperteils (41), wobei die erste umlaufende Kavität (11) einen Steg (13) aufweist, welcher im ersten umlaufenden Kunststoffkörperteil (41) an der Stirnseite des Randbereichs des Einlegeteils (4) eine Aussparung (43) ausbildet;
d. Bereitstellen einer zweiten Formpartie (2) eines Spritzgusswerkzeugs;
e. Einlegen des becherförmigen Einlegeteils (3) mit dem ersten umlaufenden Kunststoffkörperteil (41) in die zweite Formpartie (2), wobei die zweite Formpartie (2) derart ausgebildet ist, dass am zu umspritzenden Randbereich (31) aussenseitig eine zweite umlaufende Kavität (21) zur Fertigung eines zweiten umlaufenden Kunststoffkörperteils (42) ausgebildet ist und dass die Aussparung (43) im ersten umlaufenden Kunststoffkörperteil (41) mit der zweiten umlaufenden Kavität (21) verbunden ist;
f. Einspritzen einer zweiten Kunststoffschmelze in die zweite Formpartie (2), so dass die zweite Kunststoffschmelze durch die Aussparung (43) des ersten Kunststoffkörperteils (41) fliesst, die zweite Kavität (21) füllt und so den zweiten Kunststoffkörperteil (42) ausbildet;
g. Entformen des Erzeugnisses mit einem umlaufenden Kunststoffkörper (4) bestehend aus dem ersten und dem zweiten Kunststoffkörperteil (41, 42).

2. Verfahren nach Anspruch 1, **dadurch gekennzeichnet, dass** die erste und zweite Kavität (11, 21) jeweils mindestens eine Einspritzstelle (12, 12', 22) für die erste respektive zweite Kunststoffschmelze aufweisen.

3. Verfahren nach einem der vorangehenden Ansprüche, **dadurch gekennzeichnet, dass** der Steg (13) in einem Bereich angeordnet ist, in welchem zwei Fliessfronten der ersten Kunststoffschmelze zusammentreffen.

4. Verfahren nach einem der vorangehenden Ansprüche, **dadurch gekennzeichnet, dass** die erste Kavität (1) mehrere Einspritzstellen (12, 12') und mehrere Stege (13, 13') aufweist, wobei die mehreren Einspritzstellen (12, 12') entlang der ersten Kavität (11) gleichmässig angeordnet sind und die mehreren Stege (13, 13') jeweils mittig zwischen zwei Einspritzstellen (12, 12') angeordnet sind.

5. Verfahren nach einem der vorangehenden Ansprüche, **dadurch gekennzeichnet, dass** das Einlegeteil (3) mit dem ersten Kunststoffkörperteil (41) derart in die zweite Formpartie (2) eingelegt wird, dass die Aussparung (43) sich bei der Einspritzstelle (22) für die zweite Kunststoffschmelze befindet.

6. Verfahren nach einem der vorangehenden Ansprüche, **dadurch gekennzeichnet, dass** sich die Einspritzstelle (12, 12') für die erste Kunststoffschmelze und die Einspritzstelle (22) für die zweite Kunststoffschmelze auf der gleichen Seite der jeweiligen Formpartie (1, 2) befinden.

7. Verfahren nach einem der vorangehenden Ansprüche, **dadurch gekennzeichnet, dass** das Erzeugnis ein Behälter ist, wobei das Einlegeteil (3) eine Behälterkörper oder eine Behälterwand ausbildet und der Kunststoffkörper (4) einen umlaufenden Kragen mit einem flanschähnlichen nach aussen gerichteten Rand, ein Aussengewinde oder Rastmittel für einen Behälterdeckel ausbildet.

8. Spritzgusswerkzeug zur Durchführung des Verfahrens nach einem der vorangehenden Ansprüche, wobei das Spritzgusswerkzeug mindestens eine erste Formpartie (1) und mindestens eine zweite Formpartie (2) umfasst, wobei die erste Formpartie (1) eine erste umlaufende Kavität (11) ausgebildet, in welche das Einlegeteil (3) mit dem zu umspritzenden Randbereich (31) einlegbar ist, so dass die Aussenseite des Randbereichs (31) an einer Wand der ersten Kavität (11) anliegt; wobei die erste umlaufende Kavität (11) einen Steg (13) zur Erzeugung einer Aussparung im ersten umlaufenden Kunststoffkörperteil aufweist; **dadurch gekennzeichnet, dass** die zweite Formpartie (2) derart ausgebildet ist, dass das becherförmige Einlegeteil (3) mit dem ersten umlaufenden Kunststoffkörperteil (41) in die zweite Formpartie (2) einlegbar ist und dass am zu umspritzenden Randbereich (31) aussenseitig eine zweite umlaufende Kavität (21) zur Fertigung des zweiten umlaufenden Kunststoffkörperteils (42) ausgebildet ist, wobei die Aussparung (43) im ersten umlaufenden Kunststoffkörperteil (41) mit der zweiten umlaufenden Kavität (21) verbunden ist.

9. Spritzgusswerkzeug nach Anspruch 8, **dadurch gekennzeichnet, dass** die erste Kavität (1) mehrere Einspritzstellen (12, 12') und mehrere Stege (13, 13') aufweist, wobei die mehreren Einspritzstellen (12, 12') entlang der ersten Kavität (1) gleichmässig angeordnet sind und die mehreren Stege (13, 13') jeweils mittig zwischen zwei Einspritzstellen (14, 14') angeordnet sind.

10. Spritzgusswerkzeug nach Anspruch 8 oder 9, **dadurch gekennzeichnet, dass** sich die Einspritzstelle (12, 12') für die erste Kunststoffschmelze und die Einspritzstelle (22) für die zweite Kunststoffschmelze auf der gleichen Seite der jeweiligen Formpartie (1, 2) befinden.

## Claims

1. A method for the manufacture of a product comprising a cup-shaped insert part (3) with a circumferential rim to be reinforced and a circumferential plastic body (4) moulded onto the rim, wherein the plastic body (4) encloses an edge area (31) of the cup-shaped insert part (3) on both sides and on the front side, wherein the method comprises the following steps:
a. providing a first mould section (1) of an injection moulding tool;
b. inserting the cup-shaped insert part (3) into the first mould section (1), wherein the first moulded section (1) and the insert part (3) are designed such that a first circumferential cavity (11) is formed on the inside and front side of the edge area (31) and the insert part (3) rests with the outside of the edge area (31) against a wall of the first cavity (11);
c. injection a first plastic melt into the first circumferential cavity (11) for the production of a first circumferential plastic body part (41), wherein the first circumferential cavity (11) has a web (13), which forms a recess (43) in the first circumferential plastic body part (41) at the front of the edge area of the insert part (4);
d. providing a second mould section (2) of an injection moulding tool;
e. inserting the cup-shaped insert part (3) with the first circumferential plastic body part (41) into the second mould section (2), wherein the second mould section (2) is designed in such a way that a second circumferential cavity (21) is formed on the outside of the edge area (31) to be over-moulded for the production of a second circumferential plastic body part (42) and that the recess (43) in the first circumferential plastic body part (41) is connected to the second circumferential cavity (21);
f. injecting a second plastic melt into the second mould section (2) so that the second plastic melt flows through the recess (43) of the first plastic body part (41), fills the second cavity (21) and thus forms the second plastic body part (42);
g. demoulding the product with a circumferential plastic body (4) consisting of the first and second plastic body parts (41, 42).

2. The method according to claim 1, **characterized in that** the first and second cavities (11, 21) each have at least one injection points (12, 12', 22) for the first and second plastic melts, respectively.

3. The method according to any one of the preceding claims, **characterized in that** the web (13) is arranged in a region in which two flow fronts of the first plastic melt meet.

4. The method according to any one of the preceding claims, **characterized in that** the first cavity (1) has several injection points (12, 12') and several webs (13, 13'), wherein the several injection points (12, 12') are uniformly arranged along the first cavity (11) and the several webs (13, 13') are each centrally arranged between two injection points (12, 12').

5. The method according to any one of the preceding claims, **characterized in that** the insert part (3) with the first plastic body part (41) is inserted into the second mould section (2) in such a way that the recess (43) is located at the injection point (22) for the second plastic melt.

6. The method according to any of the preceding claims, **characterized in that** the injection point (12, 12') for the first plastic melt and the injection point (22) for the second plastic melt are located on the same side of the respective mould section (1, 2).

7. The method according to any one of the preceding claims, **characterised in that** the product is a container, wherein the insert part (3) forms a container body or a container wall and the plastic body (4) forms a circumferential collar with a flange-like outward-facing edge, an external thread or latching means for a container lid.

8. An injection mould for carrying out the process according to any of the preceding claims, wherein the injection mould comprises at least a first mould section (1) and at least a second mould section (2), wherein the first mould section (1) forms a first circumferential cavity (11) into which the insert part (3) with the edge area (31) to be over-moulded can be inserted, so that the outside of the edge area (31) rests against a wall of the first cavity (11); wherein the first circumferential cavity (11) has a web (13) to create a recess in the first circumferential plastic body part; **characterized in that** the second mould section (2) is designed in such a way that the cup-shaped insert part (3) with the first circumferential plastic body part (41) can be inserted into the second mould section (2) and that a second circumferential cavity (21) is formed on the outside of the edge area (31) to be over-moulded for the production of the second circumferential plastic body part (42), wherein the recess (43) in the first circumferential plastic body part (41) is connected with the second circumferential cavity (21).

9. The injection mould according to claim 8, **characterised in that** the first cavity (1) has several injection points (12, 12') and several webs (13, 13'), wherein the several injection points (12, 12') are evenly arranged along the first cavity (1) and the several webs (13, 13') are each centrally arranged between two injection points (14, 14').

10. The injection mould according to claim 8 or 9, **characterised in that** the injection point (12, 12') for the first plastic melt and the injection point (22) for the second plastic melt are located on the same side of the respective mould section (1, 2).

## Revendications

1. Procédé de fabrication d'un produit comprenant une pièce d'insert en forme de coupelle (3) avec un bord circonférentiel à renforcer et un corps circonférentiel en plastique (4) moulé sur le rebord, dans lequel le corps en plastique (4) entoure une zone de bord (31) de la partie d'insert en forme de coupelle (3) des deux côtés et sur la face avant, dans lequel le procédé comprend les étapes suivantes :
a. la fourniture d'une première section de moule (1) d'un outil de moulage par injection ;
b. l'insertion de la pièce d'insertion en forme de coupe (3) dans la première section de moule (1), dans laquelle la première section moulée (1) et la partie d'insertion (3) sont conçues de telle sorte qu'une première cavité circonférentielle (11) soit formée à l'intérieur et à l'avant de la zone de bord (31) et que la partie d'insertion (3) repose avec l'extérieur de la zone de bord (31) contre une paroi de la première cavité (11) ;
c. injection d'une première masse plastique fondue dans la première cavité circonférentielle (11) pour la production d'une première partie de corps circonférentielle en plastique (41), dans laquelle la première cavité circonférentielle (11) comporte une âme (13), qui forme un évidement (43) dans la première partie circonférentielle du corps en plastique (41) à l'avant de la zone de bord de la pièce d'insertion (4) ;
d. la fourniture d'une deuxième section de moule (2) d'un outil de moulage par injection ;
e. l'insertion de la pièce d'insert en forme de coupelle (3) avec la première partie de corps circonférentielle en plastique (41) dans la deuxième section de moule (2), dans laquelle la deuxième section de moule (2) est conçue de telle manière qu'une seconde cavité circonférentielle (21) est formée à l'extérieur de la zone de bord (31) à surmouler pour la production d'une seconde partie de corps circonférentielle en plastique (42) et que l'évidement (43) de la première partie circonférentielle de corps en plastique ( 41) est reliée à la deuxième cavité circonférentielle (21) ;
f. l'injection d'une seconde masse fondue plastique dans la deuxième section de moule (2) de sorte que la seconde masse fondue plastique s'écoule à travers l'évidement (43) de la première partie du corps en plastique (41), remplisse la seconde cavité (21) et forme ainsi la seconde partie du corps en plastique (42) ;
g. le démoulage du produit à l'aide d'un corps circonférentiel en plastique (4) constitué de la première et de la deuxième partie du corps en plastique (41, 42).

2. Procédé selon la revendication 1, **caractérisé en ce que** la première et la seconde cavités (11, 21) ont chacune au moins un point d'injection (12, 12', 22) pour la première et la seconde masse fondue de plastique, respectivement.

3. Procédé selon l'une quelconque des revendications précédentes, **caractérisé en ce que** la bande (13) est disposée dans une région où se rencontrent deux fronts d'écoulement du premier plastique fondu.

4. Procédé selon l'une quelconque des revendications précédentes, **caractérisé en ce que** la première cavité (1) comporte plusieurs points d'injection (12, 12') et plusieurs bandes (13, 13'), dans laquelle les différents points d'injection (12, 12') sont disposés uniformément le long de la première cavité (11) et les différentes âmes (13, 13') sont chacune disposées au centre entre deux points d'injection (12, 12').

5. Procédé selon l'une quelconque des revendications précédentes, **caractérisé en ce que** la partie d'insertion (3) avec la première partie de corps en plastique (41) est insérée dans la seconde section de moule (2) de telle sorte que l'évidement (43) soit situé au point d'injection (22) pour la seconde masse fondue de plastique.

6. Procédé selon l'une quelconque des revendications précédentes, **caractérisé en ce que** le point d'injection (12, 12') pour la première masse plastique fondue et le point d'injection (22) pour la seconde masse plastique fondue sont situés du même côté de la section de moule respective (1, 2).

7. Procédé selon l'une quelconque des revendications précédentes, **caractérisé en ce que** le produit est un récipient, dans lequel la partie d'insertion (3) forme un corps de récipient ou une paroi de récipient et le corps en plastique (4) forme un collier circonférentiel avec un bord orienté vers l'extérieur en forme de bride, un filetage extérieur ou des moyens de verrouillage pour un couvercle de récipient.

8. Moule d'injection pour réaliser le procédé selon l'une quelconque des revendications précédentes, dans lequel le moule d'injection comprend au moins une première section de moule (1) et au moins une seconde section de moule (2), dans laquelle la première section de moule (1) forme une première cavité circonférentielle (11) dans laquelle la pièce d'insertion (3) avec la zone de bord (31) à surmouler peut être insérée, de sorte que l'extérieur de la zone du bord (31) repose contre une paroi de la première cavité (11) ; dans lequel la première cavité circonférentielle (11) comporte une toile (13) pour créer un évidement dans la première partie circonférentielle du corps en plastique ; **caractérisé en ce que** la seconde section de moule (2) est conçue de telle manière que la pièce d'insertion en forme de coupelle (3) avec la première partie de corps circonférentielle en plastique (41) puisse être insérée dans la seconde section de moule (2) et qu'une seconde cavité circonférentielle (21) soit formée à l'extérieur de la zone de bord (31) à surmouler pour la production de la seconde partie circonférentielle de corps en plastique (42), dans lequel l'évidement (43) de la première partie circonférentielle du corps en plastique (41) est relié à la seconde cavité circonférentielle (21).

9. Moule d'injection selon la revendication 8, **caractérisé en ce que** la première cavité (1) comporte plusieurs points d'injection (12, 12') et plusieurs bandes (13, 13'), dans lesquelles les différents points d'injection (12, 12') sont disposés uniformément le long de la première cavité (1) et les différentes bandes (13, 13') sont chacune disposées au centre entre deux points d'injection (14, 14').

10. Moule d'injection selon la revendication 8 ou 9, **caractérisé en ce que** le point d'injection (12, 12') pour la première masse plastique fondue et le point d'injection (22) pour la seconde masse plastique fondue sont situés du même côté de la section de moule respective (1, 2).
